(19) Europäisches Patentamt
European Patent Office
Office européen des brevets

(11) EP 0 838 695 A1

(12) **EUROPÄISCHE PATENTANMELDUNG**

(43) Veröffentlichungstag:
29.04.1998 Patentblatt 1998/18

(51) Int. Cl.⁶: $G01S\ 17/58$, $G01P\ 3/36$

(21) Anmeldenummer: 97117273.9

(22) Anmeldetag: 06.10.1997

(84) Benannte Vertragsstaaten:
AT BE CH DE DK ES FI FR GB GR IE IT LI LU MC NL PT SE

(30) Priorität: 22.10.1996 DE 19643475

(71) Anmelder:
LAP GmbH Laser Applikationen
D-21337 Lüneburg (DE)

(72) Erfinder:
Drewling, Peter, Dipl.-Ing.
21259 Otter (DE)

(74) Vertreter:
Patentanwälte
Hauck, Graalfs, Wehnert,
Döring, Siemons
Neuer Wall 41
20354 Hamburg (DE)

(54) **Verfahren zur Geschwindigkeitsmessung nach dem Laser-Doppler-Prinzip**

(57) Verfahren zur Geschwindigkeitsmessung nach dem Laser-Doppler-Prinzip, bei dem mit Hilfe eines Strahlenteilers der Lichtstrahl eines Lasers in zwei sich auf oder im Meßobjekt kreuzende Teilstrahlen umgewandelt und mit Hilfe eines optischen Empfängers das spektrale Maximum der Intensitätsmodulation des reflektierten Lichts gemessen wird, gekennzeichnet durch die Anwendung eines Köster-Prismas als Strahlenteiler derart, daß die gebildeten Teilstrahlen sich im gewünschten Winkel auf oder im Meßobjekt schneiden.

Fig. 1

**Beschreibung**

Die Erfindung bezieht sich auf ein Verfahren zur Geschwindigkeitsmessung nach dem Laser-Doppler-Prinzip nach dem Oberbegriff des Patentanspruchs 1.

Bei der Geschwindigkeitsmessung (Ortsfilter-Prinzip) wird ein Raster aus äquidistanten Lichtlinien auf das Meßobjekt bzw. in das Meßmedium hinein projiziert. Bei der Bewegung der Oberfläche des Meßobjekts bzw. des Mediums senkrecht zu den Gitterlinien erfährt das reflektierte Licht eine Intensitätsmodulation, die ein spektrales Maximum aufweist, das direkt proportional ist zur Bewegungsgeschwindigkeit.

Da das projizierte Lichtmuster mit seiner Gitterkonstanten die Maßverkörperung darstellt, ist die Meßgenauigkeit des Gesamtsystems unmittelbar von der Genauigkeit des Rasters abhängig. Bei der Laser-Doppler-Geschwindigkeitsmessung wird dieses Raster innerhalb des Meßvolumens durch die Überlagerung zweier kohärenter Teilstrahlen erzeugt, die entweder durch Strahlteilung aus einem Laserstrahl hervorgehen oder von zwei synchronisierten Lasern erzeugt werden.

Die die Genauigkeit bestimmende Gitterkonstante ist von zwei wesentlichen Parametern abhängig, nämlich

dem Überlagerungswinkel der beiden Teilstrahlen

der Wellenlänge des Laserlichts.

Für die Strahlenteilung, die vorwiegend eingesetzt wird, bieten sich verschiedene bekannte Lösungen an. Eine besteht darin, das Laserlicht durch einen halbdurchlässigen Planspiegel unter 45° im Strahlengang einen ersten Teilstrahl auf das Meßobjekt zu richten und über einen zweiten Planspiegel den transmittierten Teilstrahl ebenfalls auf das Meßobjekt zu richten. Bei der Anwendung eines sogenannten Strahlenteilerwürfels, bei dem die Teilerfläche im Winkel von 45° zum Strahlengang angeordnet ist, wird ein Teilstrahl über einen Planspiegel auf das Meßobjekt gerichtet. Durch Drehung des erwähnten Strahlenteilerwürfels gegenüber dem Strahlengang um 45° besteht auch die Möglichkeit, zwei Teilstrahlen ohne einen zusätzlichen Spiegel zu erzeugen, indem die Teilerfläche im flachen Winkel zum Strahlengang angeordnet wird. Schließlich ist auch bekannt, eine Strahlenteilung mit einem optischen Gitter oder holografisch-optischen Elementen zu erzeugen.

Die ersten beiden erwähnten Systeme haben mehrere Nachteile. Die Anwendung von mehreren Komponenten ist nachteilig im Hinblick auf die Vibrationsfestigkeit. Darüber hinaus muß ein hoher Winkeljustage-Aufwand für die getrennten reflektierenden Flächen in Kauf genommen werden. Die Teilstrahlen haben unterschiedliche optische Weglängen, was besonders bei Lasern mit kurzer Kohärenzlänge, beispielsweise bei Diodenlasern, zu einer Beeinträchtigung des Überlagerungskontrastes führen kann.

Bei der Anwendung eines Strahlenteilerwürfels bei der zuletzt genannten Version ist es schwierig, ein optimales Strahlenteiler-Verhältnis zu erzielen. Geringe Fehler in der Planität der Strahlenteilerfläche haben eine erhebliche Auswirkung. Da der Auftreffwinkel relativ klein ist, wirkt sich dies bei einem unsauber definierten Indexübergang an der Verkittungsfläche des Strahlenteilerwürfels negativ aus. Die Polarisationsabhängigkeit des Reflexions/Transmissionsverhältnisses der Teilerfläche ist bei flachen Auftreffwinkeln nicht vernachlässigbar.

Die zuletzt erwähnte Variante, nämlich die Verwendung von Gittern oder holografischen Elementen, erfordert einen relativ hohen Aufwand. Außerdem gibt es Feuchtigkeitsprobleme sowie die Gefahr der Alterung bei Hologrammen auf fototechnischem Basismaterial. Der optische Wirkungsgrad ist relativ gering.

Der Erfindung liegt daher die Aufgabe zugrunde, ein Verfahren zur Geschwindigkeitsmessung nach dem Laser-Doppler-Prinzip anzugeben, das einen einfachen Aufbau hat, auch in kleineren Chargen ohne großen Aufwand herstellbar ist und konventionelle Bauteile verwenden kann.

Diese Aufgabe wird durch die Merkmale des Patentanspruchs 1 gelöst.

Erfindungsgemäß wird ein sogenanntes Köster-Prisma als Strahlenteiler verwendet derart, daß die gebildeten Teilstrahlen sich im gewünschten Winkel am bzw. im Objekt schneiden.

Das Köster-Prisma ist an sich bekannt und besteht aus einem dreieckförmig-prismatischen Strahlenteilerelement. Die Teilerfläche erstreckt sich von einer Kante des Prismas lotrecht zur gegenüberliegenden Fläche. Ein Köster-Prisma wird üblicherweise in der Interferometrie eingesetzt zur Erzeugung von zwei Parallelstrahlen. Dadurch, daß der Auftreffwinkel des Laserstrahls auf eine Seitenfläche des Köster-Prismas geändert wird, ergeben sich zwei von den Seitenflächen reflektierte Teilstrahlen, die sich in gewünschter Weise auf dem Meßobjekt kreuzen.

Die Verwendung eines Köster-Prismas bringt erhebliche Vorteile. Die optische Anordnung zeichnet sich durch eine hohe Vibrationsfestigkeit aus. Es besteht keine Drift des Überlagerungswinkels mit der Temperatur und auch keine mechanische Langzeitdrift. Eine Winkeljustage von zwei getrennten reflektierenden Flächen zueinander ist nicht erforderlich. Darüber hinaus werden gleiche optische Weglängen der beiden Teilstrahlen erhalten, was zu einer Verbesserung des Überlagerungskontrastes führt, insbesondere bei der Verwendung von Diodenlasern. Das Strahlenteilerverhältnis von 50:50% läßt sich läßt sich leicht erzielen. Planitätsfehler der Teilerfläche haben wegen des relativ großen Auftreffwinkels verhältnismäßig geringe Auswirkungen. Das gleiche gilt für einen verspannungsabhängigen unsauber definierten Indexübergang an der Verkittungsfläche des Prismas. Die Polarisationsabhängigkeit des Reflexions/Transmissionsverhältnisses der Teilerschicht ist relativ gering.

Ein Köster-Prisma ist ein konventionelles optisches Bauteil, das sich leicht beschaffen läßt, preiswert ist und reproduzierbar in kleinen und großen Chargen gefertigt werden kann. Wegen eines optisch guten Wirkungsgrades reicht eine geringere Laserleistung für den Meßbetrieb aus. Der Überlagerungswinkel kann durch Drehung des Prismas auf einfache Weise eingestellt werden. Dadurch ergibt sich ein höherer Freiheitgrad zur Einstellung der Geschwindigkeitsskalierung des Meßgerätes.

Genauigkeitsanforderungen der Laser-Doppler-Geschwindigkeitsmessung im Promillebereich erfordern eine Strahlungsquelle, die im wesentlichen wellenlängenstabil ist. Hierzu bietet sich ein eigenstabiler Gaslaser an, der jedoch verhältnismäßig aufwendig ist. Es ist auch bekannt, Diodenlaser zu verwenden, die extern wellenlängenstabilisiert sind. Es ist bekannt, die Stabilisierung der Lasertemperatur mit Hilfe eines Thermostaten zu realisieren.

Eine weitere Aufgabe der Erfindung besteht darin, eine Temperaturunabhängigkeit von in der Wellenlänge nicht stabilisierten Lasern zu erreichen. Diese Aufgabe wird durch die Merkmale des Patentanspruchs 2 gelöst.

Die Änderung der Wellenlänge einer beispielhaften Laserdiode mit der Temperatur beträgt etwa:

$$\frac{d\lambda}{dT} = 0{,}2 \, nm / \,°C$$

Danach ist die relative Änderung:

$$\frac{d\lambda}{dT} \lambda o = 0{,}033\% / \,°C = k_\lambda$$

Ohne Korrektur tritt folgender Meßfehler auf:

$$\tilde{v} = v \cdot \frac{1}{1 + k_\lambda \cdot (T\text{-}To)}$$

wobei    v die reale Geschwindigkeit
         $\tilde{v}$ die angezeigte Geschwindigkeit
         $k_\lambda$ die relative Änderung von $\lambda$
         T die Temperatur des Lasers und
         To die Bezugstemperatur ist.

Demnach ergibt sich für die reale Geschwindigkeit folgende Formel:

$$v = \tilde{v} \cdot ( 1 + k_\lambda \cdot (T\text{-}To) )$$

Diese Abhängigkeit der Wellenlänge von der Temperatur wird bei der Korrektur der gemessenen Geschwindigkeitswerte eingesetzt, indem der Meßwert entsprechend der gespeicherten Korrekturtabelle korrigiert und korrigiert angezeigt wird. Zur Durchführung des Verfahrens ist lediglich erforderlich, die Temperatur des Lasers zu messen. Ein Prozessor zur Umwandlung der Meßwerte in die Geschwindigkeitswerte ist ohnehin vorhanden.

Bei der Geschwindigkeitsmessung nach dem Laser-Doppler-Prinzip läßt sich nicht ohne weiteres feststellen, in welcher von beiden möglichen Richtungen sich das Objekt oder das Medium bewegt. Es ist bekannt, eine Richtungsbestimmung mit einem sogenannten Frequenzoffset durchzuführen. Hierbei wird einer der beiden überlagerten Teilstrahlen gegenüber dem anderen um einen festen Betrag in der Frequenz verschoben, wodurch sich als Folge auch die Meßfrequenz um den gleichen Betrag verschiebt. Bewegungen in die eine Richtung haben dann eine höhere Frequenz und Bewegungen in die andere Richtung eine niedrige Frequenz zur Folge und können somit eindeutig erfaßt werden. Der technische Aufwand zur Frequenzverschiebung eines Laserstrahls, zum Beispiel mittels akusto-optischer Effekte oder mittels bewegter Gitter, ist jedoch beträchtlich.

Daher liegt der Erfindung die weitere Aufgabe zugrunde, bei der Geschwindigkeitsmessung nach dem Laser-Doppler-Prinzip auch eine Richtungsbestimmung auf einfache Weise durchzuführen. Dies geschieht erfindungsgemäß in der Form, daß mit Hilfe eines eine Position bestimmenden Detektors die Bewegungsrichtung der granularen Kontraststruktur des reflektierten Lichts gemessen wird. Geeignete Detektoren sind an sich bekannt. Es kann z.B. eine CCD-Zeile hierfür verwendet werden oder ein PSD (Position Sensitive Detector) oder dergleichen.

Wird eine diffus reflektierende Oberfläche, etwa des Meßobjektes, mit kohärentem Laserlicht beleuchtet, so ist das (an der stochastisch rauhen Oberflächenkontur) reflektierte Licht nicht homogen verteilt, sondern weist eine räumliche Interferenzstrukur mit stochastisch verteilten Intensitäts-Minima und -Maxima auf. Wird die Oberfläche bewegt, so bewegt sich, gleichermaßen die räumliche Intensitäts-Struktur.

Durch Abbildung einer Ebene aus dieser Struktur auf einem positionssensitiven Detektor (PSD, CCD-Array oder Diodenzeile) lassen sich zeitliche Momentaufnahmen festhalten. Die Auswertung der Bewegungsrichtung ergibt sich nun durch Korrelation dieser Einzelaufnahmen.

Dieses Prinzip ähnelt dem Verfahren zur Geschwindigkeitsmessung nach dem Korrelationsprinzip. Die Erfindung verwendet zur Geschwindigkeitsmessung jedoch, wie oben erläutert, das Differenz-Doppler-Verfahren und nutzt die Speckle-Korrelation nur zur Meßbereichserweiterung bei Richtungsumkehr im Nulldurchgang der Geschwindigkeit aus. Hierdurch wird der Hauptnachteil der direkten Geschwindigkeitsmessung über die Speckle-Korrelation vermieden. Diese erzeugt nämlich eine Abhängigkeit des Meßwertes von der Fokuslage der Abbildungsoptik (Entfernungsabhängigkeit).

Die Erfindung wird nachfolgend anhand von Ausführungsbeispielen näher erläutert.

Fig. 1 zeigt schematisch eine Vorrichtung zur Durchführung des erfindungsgemäßen Verfahrens.

Fig. 2 zeigt schematisch eine Anordnung zur Bestimmung der Bewegungsrichtung.

Ein Diodenlaser 10 richtet einen kohärenten Strahl 12 auf eine Fläche eines Köster-Prismas 14. Der Strahlengang des Strahls 12 ist - im gezeigten Fall - in etwa senkrecht zur zugekehrten Fläche 16 des Prismas 14, das eine Teilerfläche 18 aufweist, die sich von der einen Kante 20 zur gegenüberliegenden Prismafläche 22 erstreckt, die senkrecht zur Teilerfläche 18 verläuft. Dadurch werden zwei Teilstrahlen 24, 26 erzeugt, die nach Durchlaufen identisch langer Wegstrecken sich an der Oberfläche eines Objekts 28 schneiden, das sich in Richtung des Pfeils 30 mit einer Geschwindigkeit v bewegt. Die Geschwindigkeit v soll gemessen werden. Die Fläche 22 des Prismas 14 erstreckt sich mithin parallel zur Bewegungsrichtung 30 des Objekts 28, oder, mit anderen Worten, die Teilerfläche 28 ist senkrecht zu dieser Bewegungsrichtung. Durch Änderung der Drehlage des Prismas 14 ist jedoch möglich, den Kreuzungswinkel der Teilstrahlen 24, 26 zu ändern.

Ein fotosensitiver Empfänger 32 empfängt das reflektierte Licht und erzeugt ein entsprechendes Ausgangssignal für einen Prozessor 34, der das spektrale Maximum ermittelt und daraus einen Geschwindigkeitsmeßwert errechnet, der auf einem Anzeigegerät 36 angezeigt wird. Es versteht sich, daß auch andere Registrierungen der Meßwerte möglich sind.

Im Prozessor 34 ist ferner eine Tabelle oder eine Gleichung gespeichert, die die Abhängigkeit der Wellenlänge des vom Laser 10 ausgesendeten Lichtes über die Temperatur des Lasers 10 wiedergibt. Diese Abhängigkeit ist im üblichen Temperaturbereich von z.B. 10 bis 40°C im wesentlichen linear. Der gemessene Geschwindigkeitswert wird daher durch die temperaturabhängigen Wellenlängenwerte korrigiert. In der Figur ist ein Temperaturfühler 38 zu erkennen, der die Temperatur des Lasers 10 mißt und dessen Meßsignal ebenfalls in den Prozessor 34 gegeben wird. Auf diese Weise kann der Prozessor in der beschriebenen Art die reale Geschwindigkeit ermitteln bzw. anzeigen.

Ein Detektor 40, z.B. eine CCD-Zeile oder ein PSD ermittelt die Verlagerungsrichtung der Kontraststruktur an der Oberfläche des Objekts 28 und damit dessen Bewegungsrichtung. Er ist mit dem Prozessor 34 verbunden. Das Verfahren arbeitet nach der Speckle-Korrelation wie weiter vorn beschrieben.

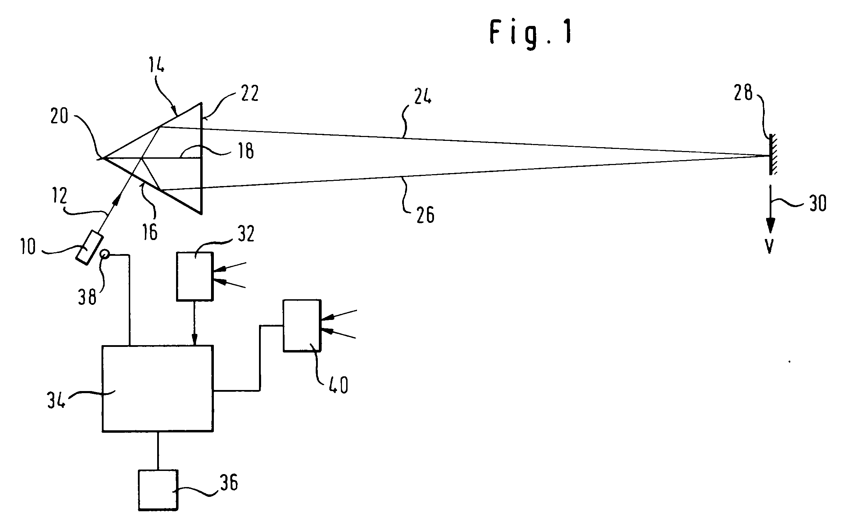

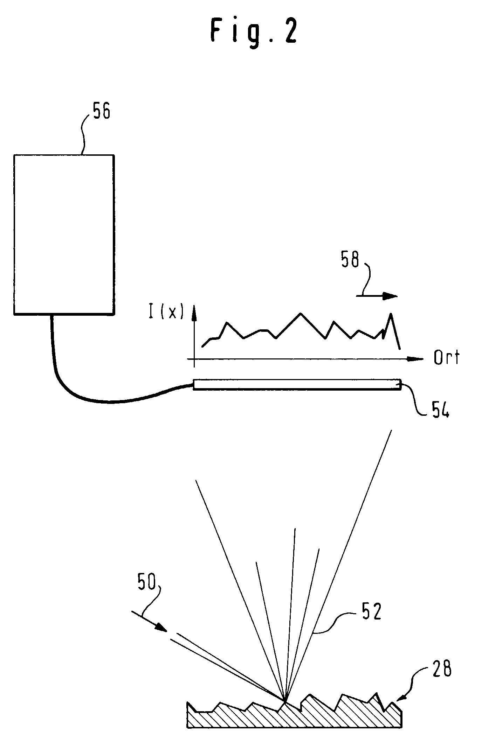

In Fig. 2 ist das Objekt 28 zu erkennen, das mit Laserlicht entsprechend Pfeil 50 bestrahlt wird, etwa entsprechend der Darstellung nach Fig. 1 und zugehöriger obiger Beschreibung. Die Striche 52 geben die reflektierten Strahlen wieder, deren Richtung und Verteilung bekanntlich von der Oberflächenstruktur des Objekts 28 abhängig ist. Das reflektierte Laserlicht wird auf einen positionssensitiven Detektor 54 gegeben, dessen Ausgangssignal von einer Auswerteeinheit 56 ausgewertet wird. Im Diagramm, das oberhalb des positionssensitiven Detektors gezeichnet, ist, ist die Intensität des auftreffenden Lichtes in Abhängigkeit vom Ort aufgezeichnet. Die Bewegungsrichtung ist durch Pfeil 58 angedeutet.

Wie weiter oben schon ausgeführt, ist das reflektierte Licht nicht homogen verteilt, sondern weist eine räumliche Inferenzstruktur auf mit stochastisch verteilten Intensitäts-Minima und -Maxima. Wird die Oberfläche bewegt, etwa in Richtung Pfeil 58, bewegt sich gleichermaßen die räumliche Intensitätsstruktur. Mit Hilfe des Detektors 54 lassen sich zeitliche Momentaufnahmen machen und in der Auswerteeinheit festhalten. Die Bewegungsrichtung ergibt sich aus der Korrelation der Einzelaufnahmen.

**Patentansprüche**

1. Verfahren zur Geschwindigkeitsmessung nach dem Laser-Doppler-Prinzip, bei dem mit Hilfe eines Strahlenteilers der Lichtstrahl eines Lasers in zwei sich auf oder im Meßobjekt kreuzende Teilstrahlen umgewandelt und mit Hilfe eines optischen Empfängers das spektrale Maximum der Intensitätsmodulation des reflektierten Lichts gemessen wird, gekennzeichnet durch die Anwendung eines Köster-Prismas (14) als Strahlenteiler derart, daß die gebildeten Teilstrahlen (24, 26) sich im gewünschten Winkel auf oder im Meßobjekt schneiden.

2. Verfahren zur Korrektur der Meßwerte bei einer Geschwindigkeitsmessung nach dem Laser-Doppler-Prinzip, insbesondere nach Anspruch 1, dadurch gekennzeichnet, daß in einem Prozessor (34) zur Berechnung der Geschwindigkeit des Meßobjekts (28) eine Korrekturtabelle oder eine Gleichung gespeichert wird, die den Zusammenhang zwischen Wellenlänge des Lasers (10) und seiner Temperatur wiedergibt, die Temperatur des Lasers (10) gemessen und der Meßwert in den Prozessor (34) gegeben wird und der Prozessor (34) die gemessene Geschwindigkeit mit den Werten der Korrekturtabelle oder der Gleichung nach Maßgabe der Temperatur korrigiert.

3. Verfahren zur Bestimmung der Bewegungsrichtung eines Meßobjektes, dessen Geschwindigkeit mit Hilfe eines Laser-Doppler-Verfahrens gemessen wird, insbesondere nach Anspruch 1 oder 2, dadurch gekennzeichnet, daß von der Abbildung einer mit kohärentem Laserlicht bestrahlten Fläche des Meßobjekts auf einem positionssensitiven Detektor zeitlich beabstandete Momentaufnahmen erstellt und gespeichert werden und die Bewegungsrichtung aus der Korrelation der Einzelaufnahmen bestimmt wird.

Fig. 1

# Fig. 2

Europäisches
Patentamt

**EUROPÄISCHER RECHERCHENBERICHT**

Nummer der Anmeldung

EP 97 11 7273

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 22 06 520 A (BBC BROWN BOVERI & CIE)<br>* Seite 4, Zeile 5 - Zeile 12; Abbildungen 1,4 *<br>* Seite 9, Zeile 9 - Zeile 14 *<br>--- | 1 | G01S17/58<br>G01P3/36 |
| Y | DE 22 47 709 A (SIEMENS AG)<br>* Seite 2, Zeile 19 - Seite 3, Zeile 4; Abbildung 1 *<br>--- | 1 | |
| Y | GB 2 187 549 A (BAT CIGARETTENFAB GMBH)<br>* Seite 3, Zeile 57 - Seite 4, Zeile 12; Abbildung 1 *<br>--- | 1 | |
| A | PATENT ABSTRACTS OF JAPAN<br>vol. 12, no. 473 (P-799), 12.Dezember 1988<br>& JP 63 191989 A (MITSUBISHI ELECTRIC), 9.August 1988,<br>* Zusammenfassung *<br>--- | 2 | |
| A | WO 91 16640 A (TABARELLI WERNER)<br>* Seite 10, Zeile 25 - Zeile 37; Abbildung 1 *<br>--- | 3 | RECHERCHIERTE SACHGEBIETE (Int.Cl.6)<br><br>G01S<br>G01P<br>H01S<br>G01B |
| A | GB 2 144 538 A (SUHL FEINMESSZEUGFAB VEB)<br>* Seite 2, Zeile 124 - Zeile 130; Abbildungen 1,2 *<br>--- | 3 | |
| A | PATENT ABSTRACTS OF JAPAN<br>vol. 014, no. 078 (P-1006), 14.Februar 1990<br>& JP 01 295191 A (SUZUKI MOTOR CO LTD), 28.November 1989,<br>* Zusammenfassung *<br>--- | 3 | |
| A | DE 41 13 936 A (SCHULZ WOLFGANG DIPL PHYS DR I)<br>* Zusammenfassung; Abbildung 1 *<br>--- | 1 | |

-/--

Der vorliegende Recherchenbericht wurde für alle Patentansprüche erstellt

| Recherchenort | Abschlußdatum der Recherche | Prüfer |
|---|---|---|
| BERLIN | 20.Januar 1998 | Breusing, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................
& : Mitglied der gleichen Patentfamilie, übereinstimmendes
    Dokument

EPO FORM 1503 03.82 (P04C03)

| | Europäisches Patentamt | EUROPÄISCHER RECHERCHENBERICHT | Nummer der Anmeldung EP 97 11 7273 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 431 832 A (NCR CO) * Zusammenfassung; Abbildung 2 * --- | 2 | |
| A | WO 93 23726 A (HONEYWELL INC) * Zusammenfassung; Abbildung 3 * ----- | | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| BERLIN | 20.Januar 1998 | Breusing, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)